# EUROPÄISCHE PATENTSCHRIFT

(11) **EP 0 450 383 B1**
(45) Veröffentlichungstag und Bekanntmachung des Hinweises auf die Patenterteilung: **18.05.1994**
(21) Anmeldenummer: 91104140.8
(22) Anmeldetag: 18.03.1991
(51) Int. Cl.: B25J 15/04, B23Q 3/155, B23Q 1/00

(54) **Zentrierende Spannvorrichtung**
Fastening and centring device
Dispositif de serrage et de centrage

(30) Priorität: 03.04.1990 DE 4010653
(43) Veröffentlichungstag der Anmeldung: 09.10.1991
(73) Patentinhaber: Lebrecht, Horst, Dipl.-Ing (FH), D-88361 Altshausen (DE)
(72) Erfinder: Lebrecht, Horst, Dipl.-Ing (FH), D-88361 Altshausen (DE)
(74) Vertreter: Pfister, Helmut, Dipl.-Ing.

(56) Entgegenhaltungen:
- EP-A- 0 120 275
- EP-A- 0 291 482
- WO-A-79/00156
- US-A- 3 860 229

## Beschreibung

Die Erfindung betrifft eine zentrierende Spannvorrichtung nach dem Gattungsbegriff des Anspruchs 1.

In der WO-A 79/00156 ist eine Zentriervorrichtung beschrieben, die im Zusammenhang mit dem Aufspannen eines Trägers auf einer Basis Verwendung finden kann. Dabei ist ein Zentrierbolzen vorgesehen, der durch hydraulische Mittel aus der Basis nach oben verschoben werden kann, um in eine Ausnehmung des Trägers einzugreifen, so daß der Träger genau justierbar ist. Der Zentrierbolzen kann, wenn gewünscht, in die Basis eingezogen werden. Zum Spannen des Trägers auf der Basis sind andere, herkömmliche Mittel vorgesehen.

Eine Spannvorrichtung gemäß dem Gattungsbericht des Anspruches 1 ist aus der DE-C 37 10 472 bekannt. Der Träger ist danach ein Werkzeug und die Basis der Arm eines Roboters. Der trägerseitige Vorrichtungsteil (Trägerteil) ist als Werkzeugaufnahme und der basisseitige Vorrichtungsteil (Basisteil) als Kupplungsorgan bezeichnet. Das passive Kupplungsorgan am Trägerteil ist ein Stehbolzen, dessen Kopf eine kegelige Hinterschnittfläche aufweist und der in eine Aufnahmebohrung des Basisteils eingreift. An der Wand dieser Bohrung befindet sich ein Kranz von Kugeln, die von einem als Ringkolben ausgebildeten Betätiger durch Federkraft zur Mitte gedrückt werden und den Kopf des Stehzapfens fassen und nach innen ziehen, bis der Trägerteil auf der freien Stirnfläche des Basisteils zur Anlage kommt. Die Zentrierung erfolgt unabhängig vom Spannsystem durch vier Zentrierzapfen mit verjüngten Spitzen, welche in Zentrieröffnungen einer in Axialrichtung elastisch verformbaren Zentrierplatte eingreifen.

Ein Nachteil dieser bekannten Spannvorrichtung wird darin gesehen, daß am Trägerteil der Stehzapfen und am Basisteil die Zentrierzapfen über die jeweilige Anlagefläche überstehen und am Basisteil eine verhältnismäßig tiefe Einstecköffnung vorhanden ist. Diese beiden Gestaltungsmerkmale lassen es nicht zu, den Maschinentisch einer Werkzeugmaschine als Basis zu verwenden, da beim Betrieb ohne Spannvorrichtung Späne und Schmutz die Einstecköffnung zusetzen würden und angesichts der vorstehenden Zentrierorgane das Auflegen, Verschieben und anderweitige Aufspannen von Werkstücken unmöglich wäre.

Der Erfindung liegt die Aufgabe zugrunde, eine auch für den Einbau in Werkzeugmaschinentische, Meßtische oder dergleichen geeignete Spannvorrichtung vorzuschlagen, welche eine verhältnismäßig niedrige Einbauhöhe (in Spannrichtung) hat und gegen Verschmutzen und Fremdkörper unempfindlich ist.

Diese Aufgabe wird ausgehend von einer Spannvorrichtung der einleitend bezeichneten Art erfindungsgemäß durch die im Kennzeichen des Anspruchs 1 angegebenen Merkmale gelöst.

Es wird unterstellt, daß die Basis eine ebene Platte ist und der Basisteil der Spannvorrichtung in diese vorzugsweise oberflächenbündig eingelassen und im Ruhezustand schmutzdicht abgeschlossen ist. Eine solche als Maschinentisch ausgebildete Basis kann außerdem mit T-Nuten oder Durchbrechungen versehen sein, so daß Werkstücke wie üblich zum Bearbeiten mit Spannpratzen aufgespannt werden können.

Es ist jedoch auch möglich, mit Hilfe der Spannvorrichtung einen Träger mitsamt einem darauf befestigten Werkstück schnell und hochgenau zu positionieren und zu spannen. Dabei kann auch der Träger eine ausgedehnte ebene Auflagefläche haben, die unmittelbar auf die Oberfläche der Basis zu liegen kommt. Damit kann vorteilhafterweise eine vibrationsfreie Verspannung erreicht werden. Die Elemente des Kupplungsorgans im Basisteil sind vor Verschmutzung geschützt. Dabei ist es leicht möglich, die dem Trägerteil zugewandte Vorderfläche des Kupplungsorgans im Basisteil geschlossen und wenn gewünscht, auch dicht auszubilden. Dieser Schutz wirkt insbesondere vor dem Aufsetzen und nach dem Abheben des Trägers.

Der erfindungsgemäße Vorschlag kann in zwei Varianten verwirklicht werden. Das passive Kupplungsorgan kann vom Trägerteil nach unten vorstehen, so daß beim Aufsetzen des Trägers auf die Basis das passive Kupplungsorgan wenigstens teilweise in das aktive Kupplungsorgan eindringt.

Bei einer anderen Bauweise ist vorgesehen, daß das aktive Kupplungsorgan in eine über die Anlagefläche vorstehende Arbeitsstellung verfahrbar ist.

Vorzugsweise ist das passive Kupplungsorgan in den Trägerteil eingelassen, wobei daneben angrenzend ein Freiraum vorzusehen ist, in welchen das aktive Kupplungsorgan einfahren kann. Es ist vorteilhaft, das passive Kupplungsorgan schwimmend, das heißt querbeweglich oder pendelfähig zu lagern, um die Zugkräfte gleichmäßig einzuleiten. Das passive Kupplungsorgan kann insbesondere ein Zapfen sein, der von einem Ringraum umgeben ist, oder auch eine Hülse, die vom aktiven Kupplungsorgan von innen erfaßt wird. Durch die vertiefte Anordnung erfährt das passive Kupplungsorgan Schutz gegen Beschädigung beim häufigen Transport des Trägers.

Das ein- und ausfahrbare aktive Kupplungsorgan besteht vorzugsweise aus zwei ineinander und in dem Basisteil in Achsrichtung verschiebbar geführten Ringkolben sowie an diesen gehaltenen Spannelementen, die infolge einer Verschiebung des einen Ringkolbens gegenüber dem anderen das passive Kupplungsorgan fassen und eine Spannkraft auf dieses ausüben. Es eignen sich verschiedene bekannte Spannelemente, die spreizbar am Außenumfang des aktiven Kupplungsorgans angebracht werden, wenn das passive Kupplungsorgan eine von innen zu fassende Hülse ist. Andernfalls sitzen die Spannorgane am Innenumfang und werden radial nach innen bewegt.

Ein bevorzugtes aktives Kupplungsorgan ergibt sich dadurch, daß der äußere Ringkolben einen die Stirnfläche des inneren Ringkolbens übergreifenden Bund aufweist, an dessen dem inneren Ringkolben zugewandter ebener Stützfläche sich Kugeln abstützen, und daß die Stirnfläche des inneren Ringkolbens derart abgeschrägt ist, daß er die Kugeln radial nach innen drückt, so daß sie den Kopf des als Kupplungszapfen ausgebildeten passiven Kupplungsorgans hintergreifen und auf dessen kegeliger Hinterschnittfläche zur Anlage kommen. Die beiden Ringkolben fahren zunächst gemeinsam aus. Danach fährt der innere Ringkolben weiter und leitet dadurch den Spannvorgang ein.

Hierzu ist es erforderlich, daß der äußere Ringkolben einen Anschlag aufweist, welcher seinen Ausfahrhub bezüglich des Basisteils in der Arbeitsstellung begrenzt. Ferner wird vorgeschlagen, daß die Ringkolben gegenseitige Mitnahmeanschläge aufweisen, so daß der innere Ringkolben den äußeren Ringkolben beim Einfahren in die Ruhestellung mitnimmt.

Was die Betätigung des aktiven Kupplungsorgans angeht, ist vorzuziehen, es mittels eines Federorgans in die Ruhestellung zu bringen und einen mechanischen oder hydraulischen Kraftantrieb zum Spannen zu verwenden. Konstruktiv kann das dadurch erreicht werden, daß eine am Basisteil angebrachte Zentralsäule den inneren Ringkolben durchsetzt und führt, daß eine an der Zentralsäule abgestützte Feder den inneren Ringkolben in die Ruhestellung zurückführt und daß die innen gelegenen Stirnflächen beider Ringkolben zum Ausfahren und Spannen mit einem Druckmittel beaufschlagbar sind.

Die Zentralsäule hat eine weitere wesentliche Bedeutung insofern, als in der Ruhestellung die von dem Bund des äußeren Ringkolbens gebildete Öffnung durch die Kopfpartie der Zentralsäule geschlossen ist und die äußeren Stirnflächen mit der Anlagefläche der Basis eine gemeinsame Ebene bilden. Zweckmäßigerweise sind auch Dichtungen vorgesehen, so daß die Bewegungsspalte gegen eindringenden Schmutz wirksam abgedichtet sind.

Die Zentrierung des Trägerteils in der Anlageebene wird vorzugsweise dadurch erreicht, daß das Trägerteil einen Zentrierkegel aufweist, der in Spannrichtung federnd nachgebend ist, und daß dieser mit einer entsprechenden Kegelfläche am Basisteil zusammenwirkt. Es wird ein besonderer Vorteil darin gesehen, daß der Zentrierkegel ein kegeliger, über die Anlagefläche des Trägers vorstehender Ringbund ist, dem eine entsprechende Ringnut am Basisteil zugeordnet ist, wobei der Ringbund und die Ringnut die Kupplungsorgane umfassen. Die federnd nachgebende Gestaltung vermeidet eine geometrische Überbestimmung und wird vorteilhafterweise dadurch erreicht, daß der Wurzelbereich des Ringbundes durch eine äußere und eine innere schmale radiale Ringnut, die in Spannrichtung gegeneinander versetzt sind, in seinem Querschnitt reduziert und S-förmig ausgestaltet ist. Dabei entsteht ein dünner, sich im wesentlichen parallel zu den Anlageflächen erstreckender Membranbereich, der einer elastischen Biegeverformung unterzogen werden kann, eine radiale Bewegung des Ringbundes jedoch nicht zuläßt. Ein Vorteil dieser Zentrieranordnung besteht auch darin, daß, sobald der Träger aufgesetzt ist und die zusammenwirkenden Zentrierflächen aneinanderliegen, der freie Ringraum des Trägers abgedichtet und geschützt ist, so daß das Ausfahren des aktiven Kupplungsorgans und der Spannvorgang weder durch Schmutz noch durch hindernde Gegenstände beeinträchtigt werden kann. Somit wirkt auch die Zentriereinrichtung bei der Abdichtung des Kupplungsorgans mit.

Zur Winkelpositionierung des Trägers auf der Basis bezüglich der Achse der Zentrierorgane wird vorgeschlagen, daß am Träger wenigstens ein in seiner Breitenerstreckung federnd nachgebender Vorsprung und an der Basis wenigstens eine radial verlaufende Rechtecknut vorgesehen ist. Um diese leicht reinigen zu können, wird sie vorzugsweise so angeordnet, daß sie in die vorerwähnte Ringnut mündet. Sinnvoll ist es, vier Nuten kreuzförmig anzuordnen, so daß eine Positionierung in 90 Grad-Schritten möglich ist. Dazu können z.B. zwei Vorsprünge nach Art von Nutensteinen am Träger angebracht sein, von denen jeweils durch eine schmale, tiefe Nut ein federnder Schenkel abgeteilt ist, damit sich die Vorsprünge in die Nut spielfrei einpassen können.

Um zu verhindern, daß die als Spannelemente wirkenden Kugeln verloren gehen, wird vorgeschlagen, daß sie diametral durchbohrt und nach Art einer Perlenkette auf einem kreisförmigen Federdrahtbügel aufgereiht sind. Dadurch werden sie auch dann an ihrem Ort gehalten, wenn kein Tragteil aufgesetzt ist und dennoch das aktive Kupplungsorgan betätigt wird. Ferner wird vorgeschlagen, daß die Kugeln an zwei Seiten gleichachsig kegelig abgeflacht sind, und zwar derart, daß die Verlängerungen der Kegelmantellinien, an denen sich die Kugeln berühren, sich annähernd im Mittelpunkt des Kugelkranzes schneiden. Dadurch werden Taumelbewegungen der Kugeln während des Spannvorgangs vermieden und der Federdrahtbügel entlastet.

Die Spannvorrichtung wurde vorstehend zwar im Hinblick auf eine plattenförmige Basis und einen plattenförmigen Träger beschrieben und es ist noch darauf hinzuweisen, daß bei Platten größerer Abmessungen zur Erreichung ausreichender Spannkräfte selbstverständlich mehrere Spannvorrichtungen gemeinsam verwendet werden können in dem Sinne, daß mehrere Basisteile an einer Basis und mehrere Trägerteile am Träger angebracht sind. Im Falle von wenigstens zwei Spannvorrichtungen kann in diesem Fall auf die Radialnuten und Nutensteine zur Winkelpositionierung verzichtet werden. Andererseits kann die Vorrichtung aber auch unabhängig von diesen plattenförmigen Strukturen zum Spannen und hochgenauen Positionieren einzelner Werkzeuge oder Werkstücke verwendet werden. Gedacht ist z.B. an das Aufspannen von Wechselwerkzeugen auf den werkzeugführenden Teil einer Maschine, wie z.B. von Erodierelektroden auf die Pinole einer Elektro-Erodiermaschine. Grundsätzlich eignet sich die Vorrichtung in allen Fällen, in denen entsprechende bekannte Vorrichtungen verwendet werden. Eine Abwandlung gegenüber der Anwendung bei plattenförmigen Strukturen ist dann allerdings insofern vorzunehmen, als die Vorrichtungsteile selbst Anlageflächen als Positionierungsreferenz in Spannrichtung aufweisen müssen.

In den genannten und anderen Anwendungsfällen kann von den Vorteilen der beschriebenen konstruktiven Details auch dann Gebrauch gemacht werden, wenn das aktive Kupplungsorgan nicht verfahrbar ist. Es wird vorgeschlagen, daß der Träger und die Basis oder die Vorrichtungsteile miteinander in Berührung kommende ebene Anlageflächen haben und daß die Zentrierorgane als die Kupplungsorgane umfassende Partien mit je einer konischen Ringfläche ausgebildet sind. Vorzugsweise ist eines der beiden Zentrierorgane ein axial zur anderen Vorrichtung hin abstehender Ringbund. Wird die zentrierende Konusfläche an dessen Innenseite angebracht, so ist sie am besten geschützt. Andererseits ist die empfindliche konische Ringfläche am anderen Vorrichtungsteil dann gegen Beschädigungen vorteilhaft abgeschirmt, wenn sie als Seitenfläche einer in Achsrichtung geöffneten Ringnut ausgebildet ist. Inwieweit und ob der Basisteil und der Trägerteil bezüglich der zugehörigen Auflageflächen vorsteht oder zurücksteht (eingesenkt ist), kann den Gegebenheiten des Einzelfalls überlassen bleiben. Davon hängt es ab, ob Öffnungen zum Eingriff des entgegengesetzten Kupplungsorgans entstehen und wo die Zentrierorgane am günstigsten anzuordnen sind.

Die Erfindung wird nachfolgend anhand der Zeichnung näher erläutert. Im einzelnen zeigt
- Fig. 1: einen Axialschnitt einer zentrierenden Spannvorrichtung in Ruhestellung (Fig. 1B) und Spannstellung (Fig. 1A),
- Fig. 2: einen Querschnitt II-II eines Nutensteins
- Fig. 3: eine Draufsicht eines zum Spannen verwendbaren Kugelkranzes in größerem Maßstab und
- Fig. 4 und Fig. 5: schematische Darstellungen von zwei Varianten der erfindungsgemäßen Spannvorrichtung.

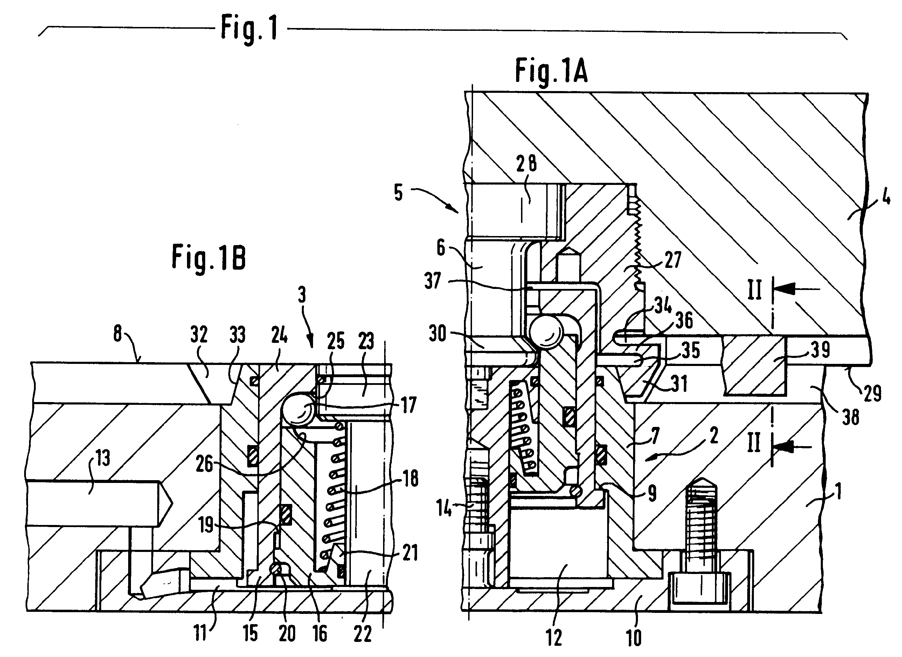

Fig. 1 zeigt eine plattenförmige Basis 1, in die das Basisteil 2 der Spannvorrichtung eingebaut ist. Letztere enthält ein aktives Kupplungsorgan 3. Nach der Darstellung in Fig. 1A ist auf die Basis 1 ein ebenfalls plattenförmiger Träger 4 aufgespannt, und zwar mit Hilfe des in diesen eingebauten Trägerteils 5 der Spannvorrichtung. Dieser Trägerteil enthält als passives Kupplungsorgan 6 einen Kupplungsbolzen. Gemäß Fig. 1B befindet sich das aktive Kupplungsorgan 3 in Ruhestellung und gemäß Fig. 1A in der Arbeits- und Spannstellung.

In diesem Beispiel ist die Basis 1 ein etwa 40 mm starker Werkzeugmaschinentisch und der Träger 4 ist eine Werkstückpalette, auf die ein nicht dargestelltes Werkstück aufgespannt ist, das nacheinander auf mehreren Maschinen bearbeitet wird und dabei auf der Palette bleibt. Diese kann mittels zweier oder mehrerer solcher Spannvorrichtungen schnell, einfach und bis auf wenige Mikrometer genau auf dem Maschinentisch aufgespannt und positioniert werden.

Zum Einbau des Basisteils 2 hat die Basis 1 eine Bohrung mit Abschnitten unterschiedlicher Durchmesser. In diese ist ein Führungsring 7 eingesetzt, der mit einem schmalen Flansch an der Schulter der großen Bohrung anliegt und dessen Stirnfläche mit der Anlagefläche 8, das heißt der Oberfläche, der Basis 1 bündig ist. Der untere Abschnitt des Führungsrings 7 hat einen größeren Innendurchmesser als sein oberer Abschnitt, wodurch eine Schulter 9 gebildet wird. Eine von unten angeschraubte Abdeckplatte 10 hält den Führungsring 7 fest. Zwei winklig zueinander geführte Bohrungen und eine Nut 11 in der Abdeckplatte 10 verbinden den Druckraum 12 unter dem aktiven Kupplungsorgan 3 mit einer in der Basis 1 verlaufenden Bohrung 13 für Hydrauliköl. In der Mitte hat die Abdeckplatte 10 einen in die Basis hinein vorstehenden Gewindezapfen 14.

Das aktive Kupplungsorgan 3 ist eine Anordnung aus zwei Ringkolben 15 und 16, einem Kranz von mehreren Kugeln 17 und einer Feder 18. Der äußere Ringkolben 15 ist in dem Führungsring 7 geführt und greift mit seinem unteren kurzen Flansch in dessen erweiterten Innenabschnitt ein. Die Bewegung dieses Ringkolbens 15 nach oben ist dadurch begrenzt, da sein Flansch an der Schulter 9 anschlägt. Auch der äußere Ringkolben 15 hat unten einen Abschnitt größeren Innendurchmessers, wodurch sich eine Schulter 19 ergibt. Der innere Ringkolben 16 hat nahe seinem unteren Ende einen äußeren Bund, der durch Anschlag an der Schulter 19 die Relativbewegung des inneren Ringkolbens 16 nach oben begrenzt. Andererseits ist diese Bewegung durch einen in den äußeren Ringkolben 15 eingesetzten Federring 20 nach unten begrenzt. Der innere Ringkolben 16 hat an seiner Innenseite unten einen im Querschnitt winkelförmigen Bund 21, der von einer Zentralsäule 22 durchsetzt ist und an dieser gleitet. Die Zentralsäule endet oben in einem Hut 23 mit zylindrischer Außenkontur und einem nicht bezeichneten Radialdichtring. Die Stirnfläche dieses Huts bildet mit der Anlagefläche 8 eine Ebene. Die Zentralsäule 22 ist auf den Gewindezapfen 14 aufgeschraubt. Die kegelige Feder 18 stützt sich einerseits an dem Bund 21 des inneren Ringkolbens und andererseits in dem Hut 23 der Zentralsäule ab.

Der äußere Ringkolben 15 hat oben einen Bund 24, der radial so weit nach innen gezogen ist, daß er an der zylindrischen Seitenwand des Huts 23 dicht anliegt. Dieser Bund 24 überdeckt die Stirnfläche des inneren Ringkolbens 16 und umschließt die Kugeln 17, denen er an seiner Unterseite eine ebene, zur Anlagefläche 8 parallele Stützfläche 25 bietet. Die Stirnfläche 26 des inneren Ringkolbens ist ausgerundet und erhält so am oberen Rand insgesamt einen keilähnlichen Querschnitt. Das hat zur Folge, daß beim Verschieben dieses inneren Ringkolbens 16 bezüglich des äußeren Ringkolbens 15 nach oben die Kugeln 17 zur Mitte gedrückt werden.

Die Fig. 1A zeigt die Einzelheiten des Trägerteils 5 der Spannvorrichtung. In eine mehrstufige Bohrung des Trägers 4, die an einem ihrer Abschnitte ein Innengewinde aufweist, ist ein Ring 27 eingeschraubt. Er legt sich mit einer Schulter über den verbreiterten Fuß 28 des passiven Kupplungsorgans 6, ohne jedoch den Fuß an den Boden der Bohrung anzupressen. Das Kupplungsorgan wird somit zwar in dem Trägerteil 5 festgehalten, es kann sich jedoch in einem geringen Ausmaß radial schwimmend bewegen. Alternativ oder zusätzlich ist eine sphärisch-ballige Ausbildung des Fußes und der Schulter möglich. Der Kopf des passiven Kupplungsorgans 6 steht nach unten nicht über die Anlagefläche 29 des Trägers 4 hinaus. Der Kopf hat eine kegelige Hinterschnittfläche 30, an welcher sich die Kugeln 17 anlegen.

Der Ring 27 hat weiter die Aufgabe der Zentrierung, das heißt der Positionierung in der Ebene der Anlageflächen. Zu diesem Zweck hat der Ring einen nach unten über die Anlagefläche 24 hinausstehenden querschnittlich trapezförmigen Bund 31, welcher in eine querschnittlich trapezförmige Ringnut 32 eintaucht. Diese Ringnut 32 befindet sich im Bereich des Führungsrings 7 und ist durch kegelige Freidrehungen teils der Basis 1 und teils des Führungsrings 7 entstanden. Die innere Kegelfläche des Bundes 31 wirkt als Zentrierfläche. Sie kommt an der dazu passend kegeligen Zentrierfläche 33 des Führungsrings 7 zur Anlage. Im übrigen ist die Ringnut 32 tiefer und breiter als der Bund 31.

Der Bund 31 ist in Spannrichtung elastisch nachgebend ausgebildet. In seinem Wurzelbereich ist von außen und innen je eine schmale tiefe Ringnut 34 bzw. 35 radial eingestochen. Zwischen diesen Ringnuten ergibt sich ein dünner, sich parallel zu den Anlageflächen erstreckender ebener Membranbereich 36. Dieser kann sich durch eine geringe Biegung elastisch verformen und trägt den Bund 31. Somit hat dieser Zentrierbund eine exakt axiale Ausweichmöglichkeit. Hierfür ist auch der Träger 4 entsprechend frei gedreht. Der Membranbereich 36 nimmt aber hohe radiale Kräfte auf.

Die beschriebene Spannvorrichtung wirkt wie folgt: In der Ruhestellung (Fig. 1B) ist das hydraulische Leitungssystem 11, 12, 13 drucklos, so daß die Feder 18 den inneren Ringkolben 16 und infolge Anschlags am Federring 20 auch den äußeren Ringkolben 15 in die gezeigte Ruhestellung zurückführt. Die Kugeln 17 nehmen ihre radial äußerste Lage ein. Mit Hilfe zweier kleinerer Ringdichtungen schließt der äußere Ringkolben 15 mit seinem Bund 24 den Ringspalt zwischen dem Führungsring 7 und dem Hut 23 der Zentralsäule flüssigkeits- und staubdicht ab. Damit ergibt sich in diesem Ruhezustand eine vollkommen ebene Oberfläche des Basisteils 2 in gleicher Höhe wie die Anlagefläche 8 und gegenüber dieser nur durch die Ringnut 32 unterbrochen. Vor dem Auflegen des Trägers 4 kann die Basis 1 somit leicht gereinigt werden, so daß sichergestellt ist, daß in dem ringförmigen Hohlraum 37 des Trägerteils 5, welcher das passive Kupplungsorgan 6 umgibt, keine störenden Metallspäne oder dergleichen eingeschlossen werden können.

Wird nun der Träger 4 aufgelegt, so greift der Bund 31 in die Ringnut 32 ein und bewirkt mittels der Zentrierfläche 33 einerseits eine Zentrierung des Trägers 4 und andererseits eine Abdichtung des erwähnten Hohlraums 37. Die Anordnung ist so getroffen, daß bei nicht allzu großem Gewicht des Trägers 4 dessen Anlagefläche 29 mit der Anlagefläche 8 der Basis 1 noch nicht vollkommen in Kontakt kommt. Wird nun jedoch der Druckraum 12 unter Druck gesetzt, so bewegen sich die beiden Ringkolben 15 und 16 gemeinsam nach oben. Der äußere Ringkolben 15 hat zunächst die Tendenz, vorauszulaufen, da er nicht unmittelbar unter Federkraft steht. Die Kugeln 17 liegen locker in ihrer ausreichend groß bemessenen Aufnahmehöhlung, so daß sie sich ohne Reibung an dem Außendichtring des Huts 23 vorbei bewegen. Der Ringkolben 15 nimmt mittels des Federrings 20 den inneren Ringkolben 16 mit. Die Bewegung erfolgt in dem Maße, wie der hydraulische Druck ausreicht, um die Feder 18 zu pressen. Infolge der bereits erfolgten Positionierung des Trägers 4 kann die Ringkolbenanordnung ohne Störung in den Hohlraum 37 einlaufen. Wenn nun der Flansch des äußeren Ringkolbens 15 an der Schulter 9 zum Anschlag kommt, bewegt sich der innere Ringkolben 16 weiter. Mit seiner hohlgewölbten Stirnfläche 26 schiebt er sich von außen hinter die Kugeln 17 und drückt diese unter der Kraft des hydraulischen Mediums radial nach innen. Dabei stützen sich die Kugeln einerseits an der ebenen Stützfläche 25 des äußeren Ringkolbens 15 und andererseits an der kegeligen Hinterschnittfläche 30 des passiven Kupplungsorgans 6 ab. Auf dieses und damit auf das Trägerteil 15 und letztlich auf den ganzen Träger 4 wird also eine zur Basis 1 hin gerichtete Kraftkomponente ausgeübt und damit der Träger 4 fest mit der Basis 1 verspannt. Damit ist dann auch die mikrometergenaue Zentrierung abgeschlossen. Während der letzten Phase des Spannvorganges federt der zentrierende Bund 31 ein. Dabei kann sich auch der Fuß 28 des passiven Kupplungsorgans noch gegenüber dem Ring 27 radial verschieben.

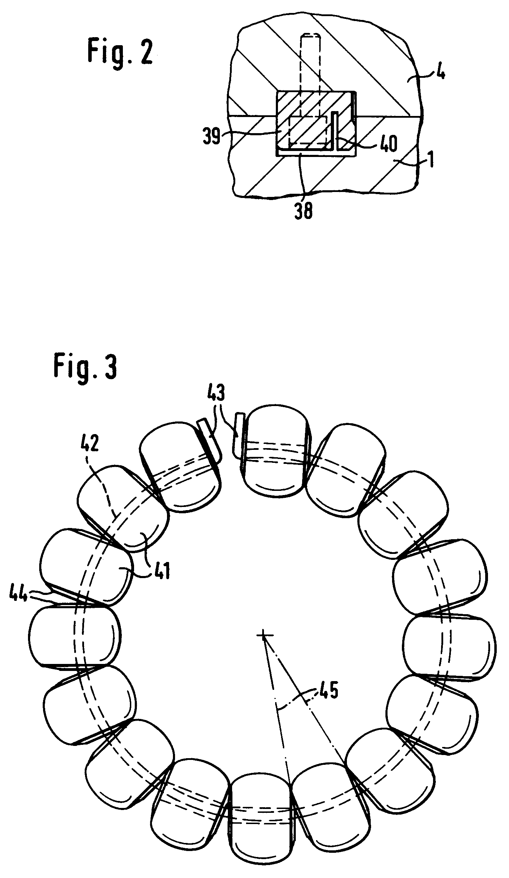

Sofern eine Spannvorrichtung allein verwendet wird, kommt es auch auf die genaue Winkelpositionierung bezüglich der Mittelachse der Vorrichtung an. Deshalb sind in die Anlagefläche 8 der Basis 1 von der Ringnut 32 ausgehende Radialnuten 38 kreuzförmig angebracht. In diese greifen beispielsweise zwei an der Anlagefläche 29 des Trägers 4 angeschraubte Nutensteine 39 ein. In Fig. 2 ist dargestellt, daß die Radialnuten 38 einen rechteckigen Querschnitt haben und daß die Nutensteine 39 durch einen schmalen Einschnitt 40 so tief gespalten sind, daß der abgespaltene schmale Schenkel in Nutenquerrichtung federnd nachgeben kann. Somit greifen die Nutensteine 39 spielfrei und ohne den Spannvorgang zu behindern in die Radialnuten 38 ein. Bei rechtwinklig kreuzförmigem Nutenverlauf sind vier verschiedene Winkelpositionen des Trägers 4 möglich.

In Fig. 3 ist ein bei der beschriebenen Spannvorrichtung verwendbarer besonders bewährter Kugelkranz in großem Maßstab dargestellt. Ein Zusammenhalt der Kugeln 17 gemäß Fig. 1 ist deshalb erwünscht, weil sie aus ihrer Ruhelage herausgedrückt und verlorengehen können, wenn das aktive Kupplungsorgan 3 betätigt wird, ohne daß ein Träger aufgesetzt und somit das passive Kupplungsorgan 6 an Ort und Stelle ist. Die Kugeln 41 nach Fig. 3 sind deshalb durchbohrt und auf einen kreisförmigen Federdrahtbügel 42 aufgereiht, dessen Enden 43 rechtwinklig nach außen abgebogen sind, so daß die Kugeln nicht herausfallen können. Aufgrund seiner Vorspannung drückt der Federdrahtbügel 42 die Kugeln radial nach außen in ihre Aufnahmehöhlung, so daß sie beim Aus- und Einfahren des aktiven Kupplungsorgans die Mantelfläche des Huts 23 der Zentralsäule nicht berühren.

Fig. 3 zeigt außerdem, daß die Kugeln 41 an zwei entgegengesetzten Seiten abgeflacht sind, wobei die Randbereiche dieser Abflachungen Kegelflächen 44 sind, mit denen sich die Kugeln linienförmig berühren. Die Kegelflächen 44 sind derart flach geneigt, daß die Berührungslinien 45 sich etwa im Mittelpunkt des Kugelkranzes schneiden. Die gezeigte Ausbildung der Kugeln 41 hat zur Folge, daß sie unter der Einwirkung erfahrungsgemäß unterschiedlicher Kräfte keine Taumelbewegung ausführen können und somit ein Verkanten oder Verbiegen des Federdrahtbügels 42 ausgeschlossen ist.

Alternativ könnte die beschriebene Spannvorrichtung auch so ausgebildet sein, daß unter Verzicht auf die Ausfahrbarkeit des aktiven Kupplungsorgans 3 der äußere Ringkolben 15 in der ausgefahrenen Stellung (Fig. 1A) mit dem Führungsring 7 ein Stück bildet. Die sonstigen konstruktiven Einzelheiten könnten unverändert bleiben. Damit würde zwar der obere Teil des erwähnten kombinierten Ringgebildes bleibend über die Anlagefläche 8 vorstehen. Das braucht jedoch dann kein Nachteil zu sein, wenn die Basis ein anderes Maschinenteil, das heißt kein Auflagetisch, ist. In diesen Fällen kann nach Zweckmäßigkeitserwägungen ausgewählt werden, in welcher Höhe die gegenseitigen Auflageflächen der Basis und des Trägers angeordnet werden sollen, nämlich z.B. unterhalb oder oberhalb des elastisch nachgebenden Ringbundes 31. Anstelle von ausgedehnten Auflageflächen mögen Ringflächen oder einzelne Stützflächen genügen, an oder zwischen denen Referenzen für die Winkelorientierung angeordnet sein können.

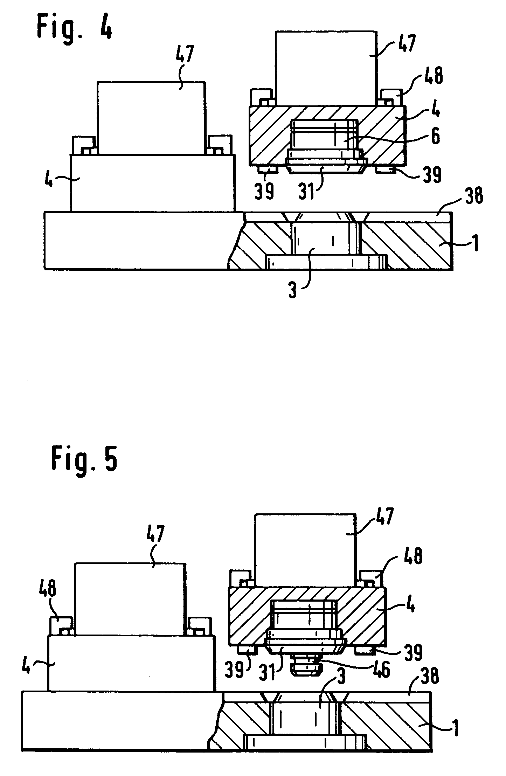

Fig. 4 und Fig. 5 zeigen zwei schematische Darstellungen der Spannvorrichtung. In der Darstellung der Fig. 4 besitzt das aktive Kupplungsorgan 3 in der Basis 1 eine Ausbildung, wie diese aus der Fig. 1 hervorgeht. Das passive Kupplungsorgan 6 im Träger 4 entspricht ebenfalls der Darstellung nach der Fig. 1. Auf dem Träger 4 ist mittels der Befestigungselemente 48 das Werkstück 47 gehalten, das nach dem Aufspannen die gewünschte, genau positionierte Stellung einnimmt.

Bei der Variante nach der Fig. 5 findet ein passives Kupplungsorgan 46 Anwendung, das vom Träger 4 nach unten vorsteht, so daß es beim Aufsetzen des Trägers 4 auf die Basis 1 in das aktive Kupplungsorgan 3 hineinragt. Bei dieser Ausbildungsform ist es nicht notwendig, daß sich das aktive Kupplungsorgan beim Spannvorgang gegen den Träger 4 vorschiebt.

## Patentansprüche

1. Zentrierende Spannvorrichtung zum Aufspannen eines Trägers (4) auf eine Basis (1), mit je einem an dem Träger (4) und der Basis (1) befestigten Vorrichtungsteil (5,2), mit einem eine Spannkraft ausübenden aktiven Kupplungsorgang (3) an dem einen und mit einem passiven Kupplungsorgan (6) an dem anderen Vorrichtungsteil, welche Kupplungsorgane (3,6) zusammenwirken und dadurch den Träger (4) auf die Basis (1) spannen, und mit zwei an den Vorrichtungsteilen (5,2) angebrachten zusammenwirkenden Zentrierorgangen (31,33), von denen eines in Spannrichtung federnd nachgebend ausgebildet ist, **dadurch** **gekennzeichnet**, **daß** der Träger (4) und die Basis (1) miteinander in Berührung kommende ebene Anlageflächen (29 bzw. 8) haben und daß das aktive Kupplungsorgan (3) im Basisteil (2) der Vorrichtung angeordnet ist, eine aktivierbare Ruhestellung aufweist, in der das Kupplungsorgan (3) in die Anlagefläche (8) der Basis (1) eingezogen ist und das beim Spannvorgang das passive Kupplungsorgan (6) ergreift und den Träger (4) gegen die Basis (1) spannt.

2. Spannvorrichtung nach Anspruch 1, dadurch gekennzeichnet, daß das aktive Kupplungsorgan (3) in eine über die Anlagefläche (8) vorstehende Arbeitsstellung verfahrbar ist.

3. Spannvorrichtung nach Anspruch 1 oder 2, dadurch gekennzeichnet, daß das passive Kupplungsorgan (6) in den Trägerteil (5) eingelassen und daneben angrenzend ein Freiraum (37) vorgesehen ist, in welchen das aktive Kupplungsorgan (3) einfahren kann.

4. Spannvorrichtung nach Anspruch 1 oder 2, dadurch gekennzeichnet, daß das aktive Kupplungsorgan (3) zwei ineinander und in dem Basisteil (2) in Achsrichtung verschiebbar geführte Ringkolben (15, 16) sowie an den Ringkolben gehaltene Spannelemente (17) aufweist, die infolge einer Verschiebung des einen Ringkolbens gegenüber dem anderen das passive Kupplungsorgan (6) fassen und eine Zugkraft auf dieses ausüben.

5. Spannvorrichtung nach Anspruch 4, dadurch gekennzeichnet, daß der äußere Ringkolben (15) einen die Stirnfläche des inneren Ringkolbens (16) übergreifenden Bund (24) aufweist, an dessen dem inneren Ringkolben (16) zugewandter ebener Stützfläche (25) sich Kugeln (17) abstützen, und daß die Stirnfläche (26) des inneren Ringkolbens derart abgeschrägt ist, daß er die Kugeln radial nach innen drückt, so daß sie den Kopf des als Kupplungszapfen ausgebildeten passiven Kupplungsorgans (6) hintergreifen und auf dessen kegeliger Hinterschnittfläche (25) zur Anlage kommen.

6. Spannvorrichtung nach Anspruch 4, dadurch gekennzeichnet, daß der äußere Ringkolben (15) einen Anschlag aufweist, welcher im Zusammenwirken mit einem Anschlag (9) des Basisteils (2) seinen Ausfahrhub in der Arbeitsstellung begrenzt, und daß mittels gegenseitiger Anschläge (19, 20) die beiden Ringkolben (15, 16) bei der Ein- und Ausfahrbewegung eine Schleppverbindung aufweisen.

7. Vorrichtung nach Anspruch 4, dadurch gekennzeichnet, dar eine am Basisteil (2) angebrachte Zentralsäule (22) den inneren Ringkolben (16) durchsetzt und führt, daß eine an der Zentralsäule abgestützte Feder (18) den inneren Ringkolben (16) in die Ruhestellung zurückführt und daß die innen gelegenen Stirnflächen beider Ringkolben zum Ausfahren und Spannen mit einem Druckmittel beaufschlagbar sind.

8. Spannvorrichtung nach Anspruch 7, dadurch gekennzeichnet, daß in der Ruhestellung die von dem Bund (24) des äußeren Ringkolbens gebildete Öffnung durch die Kopfpartie (23) der Zentralsäule abdichtend geschlossen ist und die äußeren Stirnflächen mit der Anlagefläche (8) der Basis eine gemeinsame Ebene bilden.

9. Vorrichtung nach Anspruch 1 oder 2, dadurch gekennzeichnet, daß das Trägerteil (5) einen Zentrierkegel aufweist, der in Spannrichtung federnd nachgebend ist, und daß dieser mit einer entsprechenden Kegelfläche (33) am Basisteil (2) zusammenwirkt.

10. Vorrichtung nach Anspruch 9, dadurch gekennzeichnet, daß der Zentrierkegel ein Ringbund (31) mit kegeliger Innenfläche ist, dem eine entsprechende Ringnut (32) am Basisteil (2) zugeordnet ist, wobei der Ringbund und die Ringnut die Kupplungsorgane (3, 6) umfassen.

11. Vorrichtung nach Anspruch 10, dadurch gekennzeichnet, daß der Wurzelbereich des Ringbundes (31) durch eine äußere und eine innere schmale radiale Ringnut (34, 35), die in Spannrichtung gegeneinander versetzt sind, in seinem Querschnitt reduziert und S-förmig gestaltet ist.

12. Vorrichtung nach Anspruch 1, 2 oder 16, dadurch gekennzeichnet, daß als Spannelement wirkende Kugeln (41) diametral durchbohrt und nach Art einer Perlenkette auf einen kreisförmigen Federdrahtbügel (42) aufgereiht sind.

13. Vorrichtung nach Anspruch 12, dadurch gekennzeichnet, daß die Kugeln (41) an zwei Seiten gleichachsig kegelig abgeflacht sind, und zwar derart, daß die Verlängerungen der Kegelmantellinien (45), an denen sich die Kugeln berühren, sich annähernd im Mittelpunkt des Kugelkranzes schneiden.

14. Vorrichtung nach Anspruch 1, 2 oder 16, dadurch gekennzeichnet, daß zur Festlegung der Winkelstellung bezüglich der gemeinsamen Achse der Vorrichtungsteile am Träger (4) wenigstens ein in seiner Breitenerstreckung federnd nachgebender Vorsprung (39) und an der Basis (1) wenigstens eine radial verlaufende Rechtecknut (38) vorgesehen ist.

15. Spannvorrichtung nach Anspruch 14, dadurch gekennzeichnet, daß von dem Vorsprung (39) durch einen schmalen tiefen Schlitz (40) ein federnder Schenkel abgeteilt ist.

16. Spannvorrichtung nach Anspruch 3, **dadurch gekennzeichnet,** **daß** das passive Kupplungsorgan (6) bezüglich des Trägerteils (5) eine begrenzte Querbeweglichkeit oder Taumelfähigkeit aufweist.

## Claims

1. Centering clamping device for clamping a support (4) on a base (1), with one device part (5, 2) secured to the support (4) and the base (1) respectively, with an active coupling element (3) that exerts a clamping force attached to one device part and with a passive coupling element (6) attached to the other device part, which coupling elements (3, 6) operate in conjunction and thereby clamp the support (4) to the base (1), and with two centering elements (31, 33) which operate in conjunction and are positioned on the device parts (5, 2), one of which centering elements yields elastically in the direction of clamping, characterized in that the support (4) and the base (1) have level contact areas (29 and 8) at which they come into contact, and that the active coupling element (3) is positioned in the base part (2) of the device, has an actuatable resting position in which the coupling device (3) is drawn into the contact area (8) of the base (1) and, during the clamping action, grasps the passive coupling element (6) and clamps the support (4) to the base (1).

2. Clamping device as defined in claim 1, characterized in that the active coupling element (3) can be moved into an operating position that projects above the contact area (8).

3. Clamping device as defined in claim 1 or claim 2, characterized in that the passive coupling element (6) fits into the support part (5) and adjacent thereto a free space (37) into which the active coupling element (3) can move is provided.

4. Clamping device as defined in claim 1 or claim 2, characterized in that the active coupling element (3) displays two annular pistons (15, 16) which are movable one inside the other and are movable in the base part (2) in the axial direction as well as tensioning elements (17) connected to the annular pistons, which tensioning elements grasp the passive coupling element (6) as the result of a displacement of one annular piston relative to the other and exert a tensile force on said passive coupling element.

5. Clamping device as defined in claim 4, characterized in that the outer annular piston (15) displays a collar (24) that overlaps the face of the inner annular piston (16), the level support area (25) of said collar, which support area faces the inner annular piston (16), serving to support balls (17), and that the face (26) of the inner annular piston is bevelled in such a way that it presses the balls radially inward so that they engage the head, configured as a coupling pin, of the passive coupling element (6) and come to rest on the conical undercut (25) of said head.

6. Clamping device as defined in claim 4, characterized in that the outer annular piston (15) displays a stop which, in conjunction with a stop (9) on the base part (2), limits the outer stroke of the piston in operating position, and that the two annular pistons (15, 16) display a trailing effect in their outward and return movement due to facing stops (19, 20).

7. Device as defined in claim 4, characterized in that a central column (22) positioned on the base part (2) penetrates the inner annular piston (16) and causes a spring (18) supported by the central column to return the inner annular piston (16) to resting position, and that the inner faces of the two annular pistons can be charged with a pressure medium to effect outward motion and clamping.

8. Clamping device as defined in claim 7, characterized in that an opening formed in resting position by the collar (24) of the outer annular piston is sealed by the head portion (23) of the central column and the outer faces form a common plane with the contact surfaces (8) of the base.

9. Device as defined in claim 1 or claim 2, characterized in that the support part (5) displays a centering cone which yields elastically in the direction of clamping, and that said centering cone operates in conjunction with a corresponding conical surface (33) on the base part (2).

10. Device as defined in claim 9, characterized in that the centering cone is a circular collar (31) with a conical inner surface that matches with a corresponding circular groove (32) on the base part (2), the circular collar and the circular groove together serving to encompass the coupling elements (3, 6).

11. Device as defined in claim 10, characterized in that the base area of the circular collar (31) is reduced in cross-section and given an S-shaped form by an outer and an inner narrow radial circular groove (34, 35), which grooves face each other in the direction of clamping.

12. Device as defined in claim 1, claim 2 or claim 16, characterized in that balls (41) serving as tensioning elements are drilled at facing ends and are arranged on a circular spring wire hoop (42) in the manner of a string of pearls.

13. Device as defined in claim 12, characterized in that the balls (41) are flattened conically on two sides along the same axis and in such a way that prolongations of the lines formed by the cone jackets, where the balls come into contact, intersect approximately at the center of the ball collar.

14. Device as defined in claim 1, claim 2 or claim 16, characterized in that at least one projection (39) which yields elastically along its width is provided on the support (4) in order to establish the angle position with respect to the shared axis of the device parts, and at least one radially extending rectangular groove (38) is provided on the base (1) to serve the same end.

15. Clamping device as defined in claim 14, characterized in that an elastic leg is separated from the projection (39) by a deep, narrow slot (40).

16. Clamping device as defined in claim 3, characterized in that the passive coupling element (6) is restricted in its transverse motion or wobbling motion relative to the support part (5).

## Revendications

1. Dispositif de serrage et de centrage pour la fixation d'un support (4) sur une base (1), comprenant respectivement une partie du dispositif (5, 2) fixé sur le support (4) et sur la base (1), un organe d'accouplement actif (3) exerçant une force de serrage et prévu sur l'une des parties du dispositif et un organe d'accouplement passif (6) monté sur l'autre partie du dispositif, lesdits organes d'accouplement (3, 6) coopérant l'un avec l'autre et assurant ainsi le serrage du support (4) sur la base (1), et deux organes de centrage (31, 33) montés sur les parties (5, 2) du dispositif et coopérant l'un avec l'autre, dont l'un peut céder élastiquement dans la direction de serrage, **caractérisé en ce** que le support (4) et la base (1) comportent des surfaces de contact (29 et respectivement 8) planes qui entrent en contact l'une avec l'autre, et que l'organe d'accouplement actif (3) est disposé dans l'élément de base (2) du dispositif, présente une position de repos activable dans laquelle l'organe d'accouplement actif (3) est rentré dans la surface de contact (8) de la base (1) et qui, lors de l'opération de serrage, saisit l'organe d'accouplement passif (6) et bloque le support (4) sur la base (1).

2. Dispositif de serrage selon la revendication 1, caractérisé en ce que l'organe d'accouplement actif (3) peut être déplacé dans une position de travail qui dépasse de la surface de contact (8).

3. Dispositif de serrage selon l'une des revendications 1 ou 2, caractérisé en ce que l'organe d'accouplement passif (6) est encastré dans l'élément de support (5) et qu'à côté de celui-ci est prévu un espace libre (37) dans lequel peut s'engager l'organe d'accouplement actif (3).

4. Dispositif de serrage selon l'une des revendications 1 ou 2, caractérisé en ce que l'organe d'accouplement actif (3) comprend deux pistons annulaires (15, 16) guidés l'un dans l'autre et dans l'élément de base (2) de façon mobile dans le sens axial, ainsi que des éléments de serrage (17) maintenus sur les pistons annulaires, lesdits éléments de serrage saisissant l'organe d'accouplement passif (6) et exerçant une force de traction sur celui-ci à la suite d'un déplacement de l'un des pistons annulaires par rapport à l'autre.

5. Dispositif de serrage selon la revendication 4, caractérisé en ce que le piston annulaire extérieur (15) comporte un collet (24) qui recouvre la surface frontale du piston annulaire intérieur (16) et dont la surface d'appui (25) plane tournée vers le piston annulaire intérieur (16), porte des billes (17), et que la surface frontale (26) du piston annulaire intérieur est chanfreinée de telle façon qu'il pousse les billes radialement vers l'intérieur, de sorte qu'elles passent derrière la tête de l'organe d'accouplement passif (6) conformée en pivot d'accouplement et qu'elles s'appliquent contre la surface conique contre-dépouillée (25) de celui-ci.

6. Dispositif de serrage selon la revendication 4, caractérisé en ce que le piston annulaire extérieur (15) comprend une butée qui, en coopération avec une butée (9) de l'élément de base (2) en limite la course de sortie dans la position de travail, et que les deux pistons annulaires (15, 16) présentent, lors des mouvements d'entrée et de sortie, une liaison d'entraînement réalisée au moyen de butées (19, 20) conjuguées.

7. Dispositif de serrage selon la revendication 4, caractérisé en ce qu'une colonne centrale (22) montée sur l'élément de base (2) traverse et guide le piston annulaire intérieur (16), qu'un ressort (18) qui s'appuie sur la colonne centrale ramène le piston annulaire intérieur (16) dans la position de repos, et que les surfaces frontales intérieures des deux pistons annulaires peuvent être sollicitées par un fluide sous pression pour assurer la sortie et le serrage.

8. Dispositif de serrage selon la revendication 7, caractérisé en ce que, dans la position de repos, l'ouverture formée par le collet (24) du piston annulaire extérieur est obturée de manière étanche par la partie de tête (23) de la colonne centrale, et que les surfaces frontales extérieures forment avec la surface de contact (8) de la base, un plan commun.

9. Dispositif selon l'une des revendications 1 ou 2, caractérisé en ce que l'élément de support (5) comporte un cône de centrage qui peut céder élastiquement dans la direction de serrage, et que ledit cône de centrage coopère avec une surface conique (33) conjuguée prévue sur l'élément de base (2).

10. Dispositif selon la revendication 9, caractérisé en ce que le cône de centrage est un collet annulaire (31) avec une surface intérieure conique, auquel est associée une rainure annulaire (32) correspondante sur l'élément de base (2), le collet annulaire et la rainure annulaire comprenant les organes d'accouplement (3, 6).

11. Dispositif selon la revendication 10, caractérisé en ce que la région de la racine du collet annulaire (31) présente une section transversale qui est réduite et conformée en S par deux étroites rainures annulaires radiales (34, 35) extérieure et intérieure qui sont décalées l'une par rapport à l'autre dans la direction de serrage.

12. Dispositif selon l'une des revendications 1, 2 ou 16, caractérisé en ce que des billes (41) agissant comme élément de serrage sont percées diamétralement et enfilées à la manière d'un collier de perles sur un étrier de fil d'acier à ressort (42) de forme circulaire.

13. Dispositif selon la revendication 12, caractérisé en ce que les billes (41) présentent sur les deux côtés un aplatissement conique avec le même axe, et ce de telle façon que les prolongements des génératrices du cône (45) sur lesquelles les billes se touchent, se coupent approximativement au centre de la couronne de billes.

14. Dispositif selon l'une des revendications 1, 2 ou 16, caractérisé en ce que, pour la définition de la position angulaire par rapport à l'axe commun des éléments du dispositif, il comprend sur le support (4) au moins une saillie (39) capable de céder élastiquement dans le sens de son extension en largeur, et sur la base (1), au moins une rainure rectangulaire (38) qui s'étend dans le sens radial.

15. Dispositif de serrage selon la revendication 14, caractérisé en ce qu'une branche élastique est séparée de la saillie (39) par une fente (40) étroite et profonde.

16. Dispositif de serrage selon la revendication 3, caractérisé en ce que l'organe d'accouplement passif (6) présente par rapport à l'élément de support (5) une mobilité transversale ou un possibilité de nutation limitée.
